# EUROPEAN PATENT APPLICATION

(11) **EP 1 696 375 A1**
(43) Date of publication of application: **30.08.2006**
(21) Application number: 06003904.7
(22) Date of filing: 27.02.2006
(51) Int. Cl.: G06Q 10/00

(54) **A workflow retrieval system**

(30) Priority: 28.02.2005 JP 2005054933
(71) Applicant: Ricoh Company, Ltd., Tokyo 143-8555 (JP)
(72) Inventor: Kaoru, Maeda, Ichikawa-shi Chiba (JP); Suzuki, Takeshi, Yokohama-shi Kanagawa (JP)
(74) Representative: Muschke, Markus Artur Heinz

(57) **Abstract**

A workflow retrieval system for retrieving a workflow based on a similarity degree of an attached document without showing the attached document is disclosed.

If a workflow retrieving unit 4 receives a searching condition input from a searching condition input unit 7, it acquires an attached document, and searches for documents in the document database 2, and the like by a similar document retrieving unit 3. According to a searching result, a workflow corresponding to a document identified by the searching result is acquired from the workflow database 1. An access right of a user to each task structure is examined with reference to an access right managing table such that it is determined whether there is any task element that can be displayed. When there is a task element that can be displayed, the task is added to a search result list, searching is ended, and the searching result is transmitted to a client.

## Description

### BACKGROUND OF THE INVENTION

### 1. Field of the Invention

The present invention generally relates to a workflow system of handling an electronic document, and especially relates to a dynamic workflow retrieval system wherein a document used in a workflow is made a search key.

### 2. Description of the Related Art

Workflow systems generally support carrying out two or more tasks in a sequence according to a predetermined workflow definition. However, when carrying out work that requires a high level decision and that requires difficult predictions, the workflow system may provide an outline that is somehow close to a desired result, but details that tend to be different. That is, the workflow systems are not capable of providing a complete definition of a task structure, which is the problem of the conventional workflow systems.

In an attempt to solve the problem, a technology has been disclosed, wherein
only an outline of processing is defined as a task when starting a workflow,
the following task is detailed as the workflow progresses and information is acquired, and
the workflow definition is carried out while dynamic correction is performed.

A constructive workflow, which is prior art to the present invention, is capable of adding and deleting a task at the time of execution. Further, a FRODO system disclosed by Non-Patent Reference 1 is characterized in that a task is recursively divided into subtasks at the time of execution.

In the workflow system wherein dynamic correction takes place when processing, the way in which tasks are connected (cascaded) bears a part of the knowledge concerning a process of the work, the tasks constituting the workflow. Further, it is often desired that the information be shared by users who perform the same or similar work. Providing a detailed definition of a new task of a user can be helped by searching for a past workflow of the same or almost the same work, and referencing the past task structure.

As for searching for workflows that are almost the same, there is a method using the similarity degree between attached documents, and in addition to the method using the similarity degree of tree structures of tasks, there is a method of searching for a bibliographic material of a task, and the like. Attached documents often describe information used as input/output of the work of the workflow. Accordingly, measuring the similarity degree of workflows by the similarity degree of the attached documents is considered to be relatively unaffected by differences in task structures. For the reason described above, especially, searching for the same task having different task structures is advantageous to the user who desires a detailed structuring method of a task.

### [Non-Patent Reference 1]

Homepage of the FRODO TaskMan,
http://www.dfki.de/frodo/taskman/

### [Description of the Invention]

### [Problem(s) to be solved by the Invention]

By the way, a document attached to an individual task generally contains information peculiar to each workflow instance, which is often to be concealed rather than shared from the viewpoint of security. Therefore, it is appropriate to manage an access right to the attached document by dividing the attached document into a task structure and contents.

However, in the conventional workflow systems, the task structure is fixed by the workflow definition; for this reason, access control of the task structure at the time of execution is not taken into consideration.

### SUMMARY OF THE INVENTION

In view of the problem described above, the present invention may provide a workflow retrieval system including an access control method of searching for a workflow using a similarity degree of attached documents without disclosing the contents thereof to a user, the present invention substantially obviating one or more of the problems caused by the limitations and disadvantages of the

### related art.

Features of embodiments of the present invention are set forth in the description that follows, and in part will become apparent from the description and the accompanying drawings, or may be learned by practice of the invention according to the teachings provided in the description. Problem solutions provided by an embodiment of the present invention will be realized and attained by a workflow retrieval system particularly pointed out in the specification in such full, clear, concise, and exact terms as to enable a person having ordinary skill in the art to practice the invention.

To achieve these solutions and in accordance with an aspect of the invention, as embodied and broadly described herein, an embodiment of the invention provides a workflow retrieval system as follows.

### [Means for Solving the Problem]

According to an aspect of the present invention, the workflow retrieval system supports a workflow, wherein a task structure dynamically changes, the workflow retrieval system including:
a document database for storing a document that is attached to the workflow;
a first similar document retrieving unit for searching for another attached document based on a similarity degree of the attached document;
an access right management unit for distinguishing an access right to the attached document from an access right to the task structure of the workflow, and for managing the access rights;
a first extracting unit for extracting a document attached to a workflow specified by a user when searching for the workflow;
a second similar document retrieving unit for searching the document database using the attached document extracted by the first extracting unit as a search key;
a second extracting unit for extracting a workflow that has the attached document retrieved by the second similar document retrieving unit; and
a display unit for displaying the workflow, to the task structure of which the access right is permitted irrespective of the access right of the attached document that has been searched for.

According to another aspect of the present invention, the workflow retrieval system is characterized in that
the task structure is divided into recursive partial task structures, and managed; and
the workflow is displayed as a searching result if the user is permitted to read the task structure of a higher order task element, even if the user is denied access to a task element, to which a document identified by a similar document retrieval result is attached, with reference to an access right of the user for reading the task structure.

According to another aspect of the present invention, the workflow retrieval system is characterized in that
when displaying the workflow obtained as the searching result, the partial structure, the reading access right to the task structure of which is not permitted, is displayed as a single task, and all documents attached to the partial structure are displayed as if they are attached to the single task.

### [Effect of the Invention]

As described above, according to the workflow retrieval system of the present invention, access control is realized such that a workflow is searched for using the similarity degree, and a task structure is displayed with a certain part partially being concealed without disclosing contents of the attached document to the user.

### BRIEF DESCRIPTION OF THE DRAWINGS

Fig. 1 is a block diagram showing the configuration of a workflow retrieval system according to an embodiment of the present invention;
Fig. 2 is a block diagram showing the hardware structure of the workflow retrieval system according to the embodiment of the present invention;
Fig. 3 gives block diagrams showing an example of a display method of displaying a task structure of a workflow;
Fig. 4a is a block diagram showing an example of the display method of a document attached to a task;
Fig. 4b is a block diagram showing an example of the display method of the document attached to the task;
Fig. 5a and Fig. 5b are block diagrams showing an example of the display method whereby a portion of the task structure, which portion is not permitted to be read, is not displayed;
Fig. 6a and Fig. 6b are block diagrams displaying the example of the display method shown in Figs. 5a and 5b in a flow form;
Fig. 7 is a flowchart showing operations of the workflow retrieval system according to the embodiment of the present invention;
Fig. 8 is a flowchart showing operations of determining an access right of a task structure according to the workflow retrieval system of the embodiment of the present invention.

### DESCRIPTION OF THE PREFERRED EMBODIMENTS

In the following, embodiments of the present invention are described with reference to the accompanying drawings.

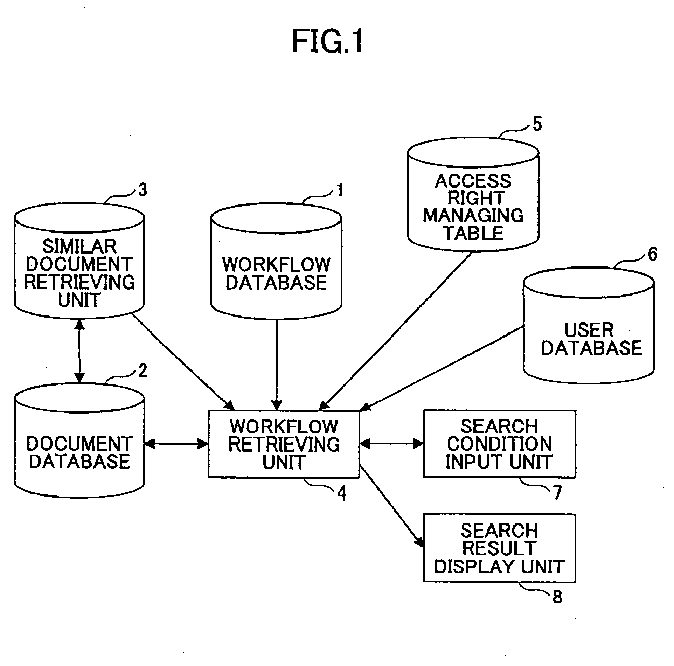

Fig. 1 is a block diagram showing the system configuration of a workflow retrieval system according to the embodiment of the present invention.

The workflow retrieval system according to the embodiment of the present invention includes a workflow database 1, a document database 2, a similar document retrieving unit 3, a workflow retrieving unit 4, an access right managing table 5, a user database 6, a searching condition input unit 7, and a searching result display unit 8.

The workflow database 1 is for storing information about a workflow that has been defined and performed, the information including time and date, an executor, and information about a document used, a connection between tasks, and the present state of the workflow. The document database 2 is a generic database using an existing technology, wherein a document and a document ID thereof are associated and stored. The similar document retrieving unit 3 is for searching a document by comparing contents of the document, and evaluating a similarity degree between documents. The similar document retrieving unit 3 can be based on an existing searching technology such as one that uses a frequency of word appearances determined by a vector space model.

The workflow retrieving unit 4 is for receiving searching conditions from the searching condition input unit 7, for searching for a workflow using the workflow database 1, the similar document retrieving unit 3, and the document database 2, for determining an access right using the access right managing table 5 and the user database 6, generating a searching result list, and for providing the searching result list to the searching result display unit 8.

The access right managing table 5 is for managing the access right of a user to a workflow, a task, and an attached document. The user database 6 is for managing the user of the workflow retrieval system according to the embodiment of the present invention. The searching condition input unit 7 is for the user to specify a workflow that is made into a searching condition, and for providing the input information to the workflow retrieving unit 4. The searching result display unit 8 is for displaying a searching result obtained by the workflow retrieving unit 4.

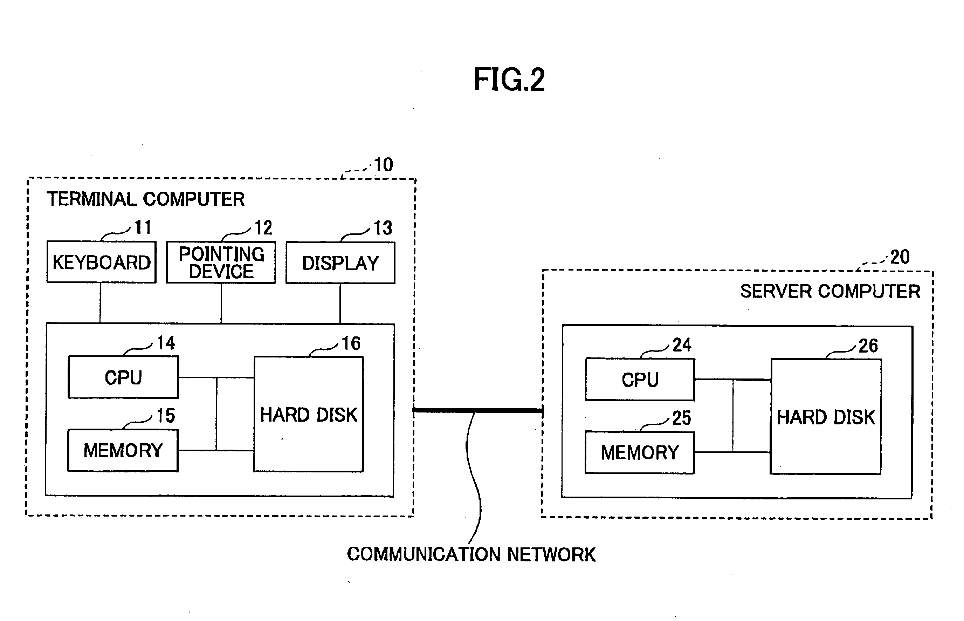

Fig. 2 is a block diagram showing the hardware structure of the workflow retrieval system according to the embodiment of the present invention.

As shown in Fig. 2, the workflow retrieval system according to the embodiment of the present invention includes a computer 10 for a terminal (terminal computer 10), and a computer 20 for a server (server computer 20).

The terminal computer 10 is for the user to execute applications. Generally, the terminal computer 10 includes a keyboard 11 and a pointing device 12 such as a mouse for inputting an inquiry and a command, and a display 13 for displaying an inquiry result. Further, the terminal computer 10 includes a CPU 14, a memory 15, and a hard disk 16 so that a software program is executed.

Further, at the terminal computer 10, a client program and a Web browser are executed as application programs on an operating system. The searching condition input unit 7 and the searching result display unit 8 shown in Fig. 1 are each executed as one of a function of a client program and an HTML document/Java® Script program/plug-in applet on a Web page, or a combination thereof.

The server computer 20 is for performing document retrieval in response to a request from the terminal computer 10. Searching conditions are received and searching results are returned by communicating with the client program or the Web browser, as applicable, of the terminal computer 10 using a protocol such as HTTP. Further, the terminal computer 10 and the server computer 20 are connected through a communications network described below.

The server computer 20 includes a CPU 24, a memory 25, and a hard disk 26 so that a software program is executable. At the server computer 20, workflow retrieving is performed as an application program on an operating system. Further, the workflow database 1, the document database 2, the similar document retrieving unit 3, the access right managing table 5, the user database 6, etc., are stored in the hard disk 26.

The communications network is a transmission line for connecting the terminal computer 10 and the server computer 20. Generally, the transmission line is provided by a cable, and TCP/IP is used as the communications protocol. However, as long as the communications protocols of the terminal computer 10 and the server computer 20 are in agreement, other transmission lines can be used such as a wireless LAN dispensing with the cable, and a network using an electromagnetic wave.

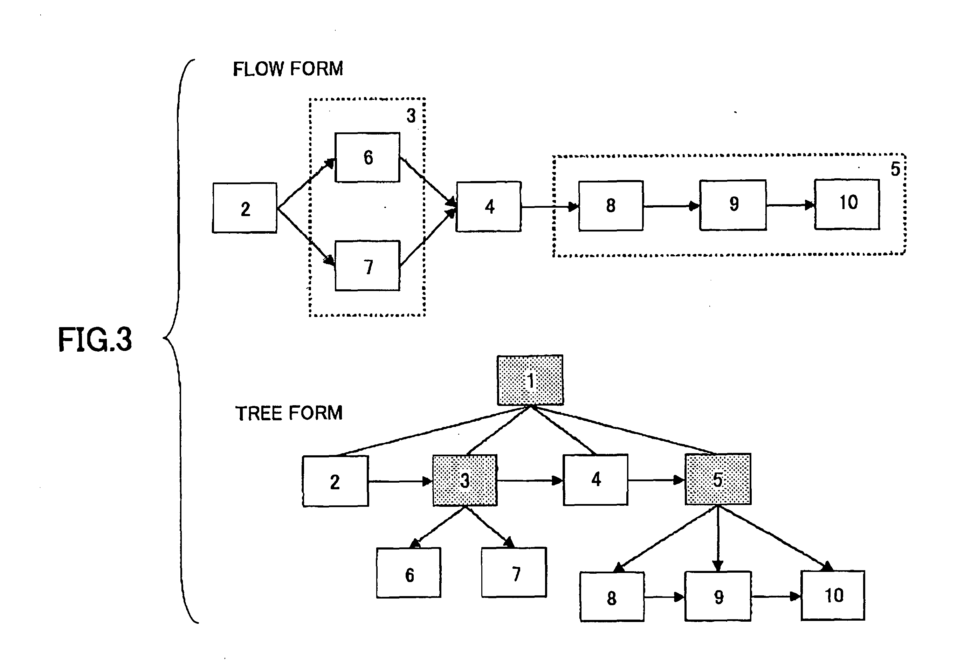

Fig. 3 shows an example of a method of displaying a task structure of a workflow. In Fig. 3, the same workflow structure is displayed in two forms, namely, a flow form and a tree form. In the flow form, nodes corresponding to task elements 3 and 5 in the tree form are not displayed as tasks.

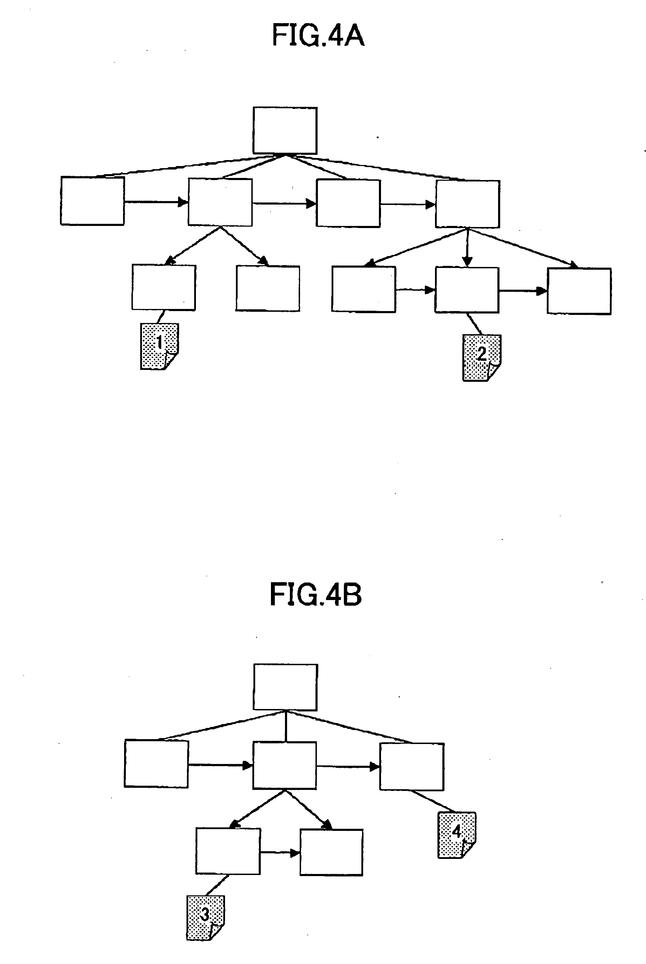

Fig. 4 shows an example wherein a document is attached to a task. One of the objectives of the embodiment of the present invention is to find a workflow shown in Fig. 4B through an attached document 4 that is determined to be "similar" to at least one of attached documents 1 and 2 that are attached to a workflow of Fig. 4A.

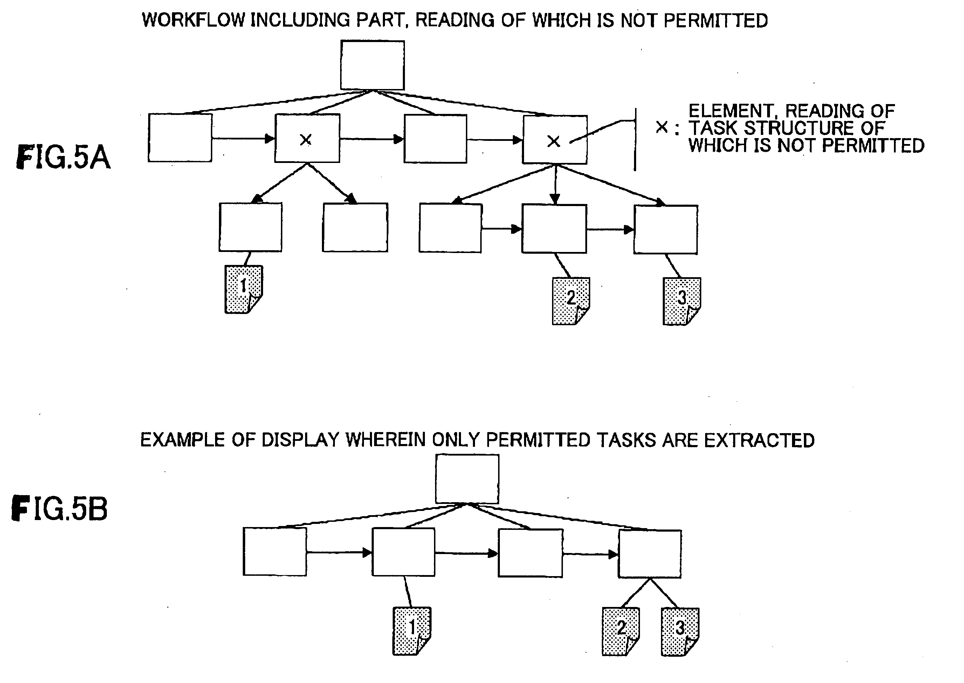

Fig. 5A shows an example wherein reading a part of a task structure is not permitted.

The user inputs a user name and a password to the searching condition input unit 7. If the password is determined correct with reference to the user database 6, the user can log in. By referring to the access control table 5 by using the user name and each task element as the search key, it is determined whether the user is permitted to read the entire task structure.

Fig. 5B shows an example wherein the user is not permitted to read a certain part of the task structure, and such partial task structure is concealed in the display. In this way, only permitted tasks are extracted and displayed if the user is not permitted to read the entire task structure.

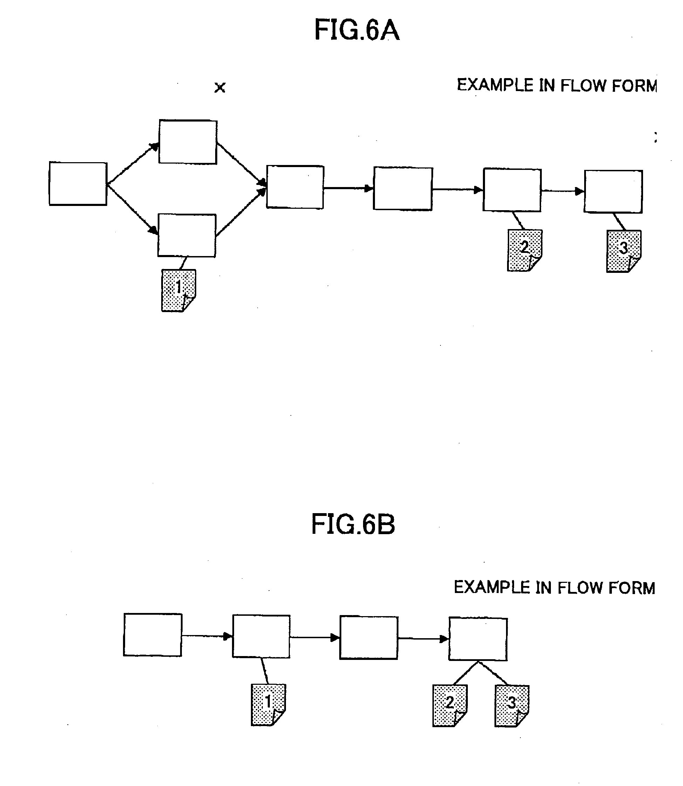

Figs. 6A and 6B show the same workflow structures as Figs. 5A and 5B, respectively, in the flow form. The middle nodes that are not displayed in Fig. 6 are representative of partial structures.

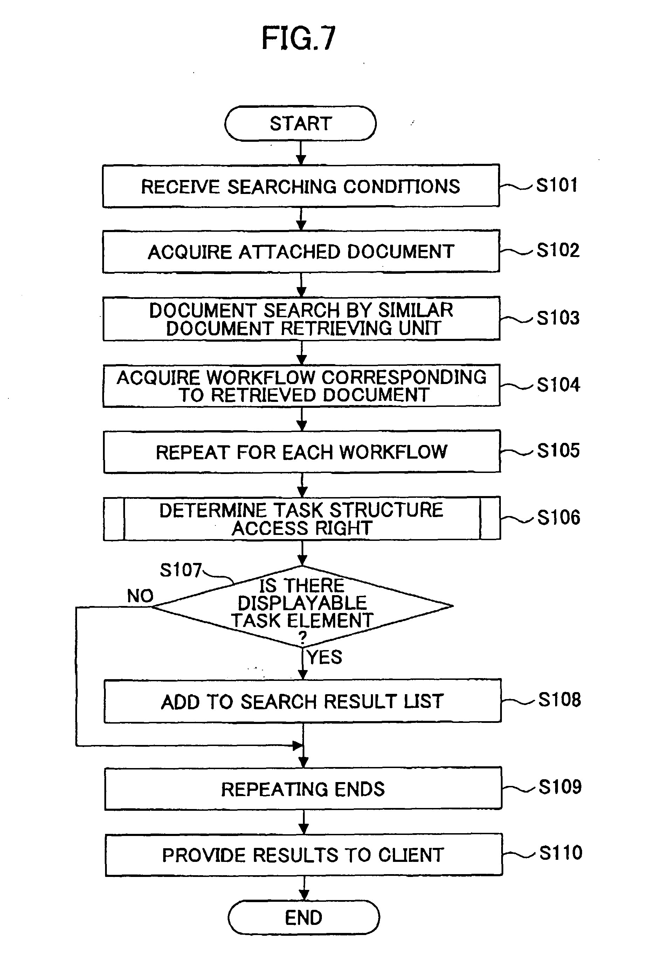

Next, operations of the workflow retrieval system according to the embodiment of the present invention are explained with reference to Fig. 7.

First, the workflow retrieving unit 4 receives searching conditions input from the searching condition input unit 7 (Step S101). Next, an attached document is acquired (Step S102) and another document is searched for in the document database 2, etc., by the similar document retrieving unit 3 (Step S103). A searching result is provided to the workflow retrieving unit 4, and then a workflow corresponding to the other document identified by the searching result is acquired from the workflow database 1 (Step S104).

The steps above are repeated for each workflow (Step S105). Next, the access right of the user to each task structure is determined with reference to the access right managing table 5 (Step S106). Here, it is determined whether there is any task element that is permitted to be displayed (Step S107). If affirmative, i.e., there is a task element that can be displayed (Yes at Step S107), the task element is added to a search result list (Step S108).

Otherwise, if negative, i.e., there is no task element that can be displayed (No at Step S107), the operations are ended (Step S109). Further, if all searches are completed (if searches have been repeated for all the workflows), the operations are ended (Step S109). Then, the searching result is transmitted to the client program of the terminal computer 10 (Step S110).

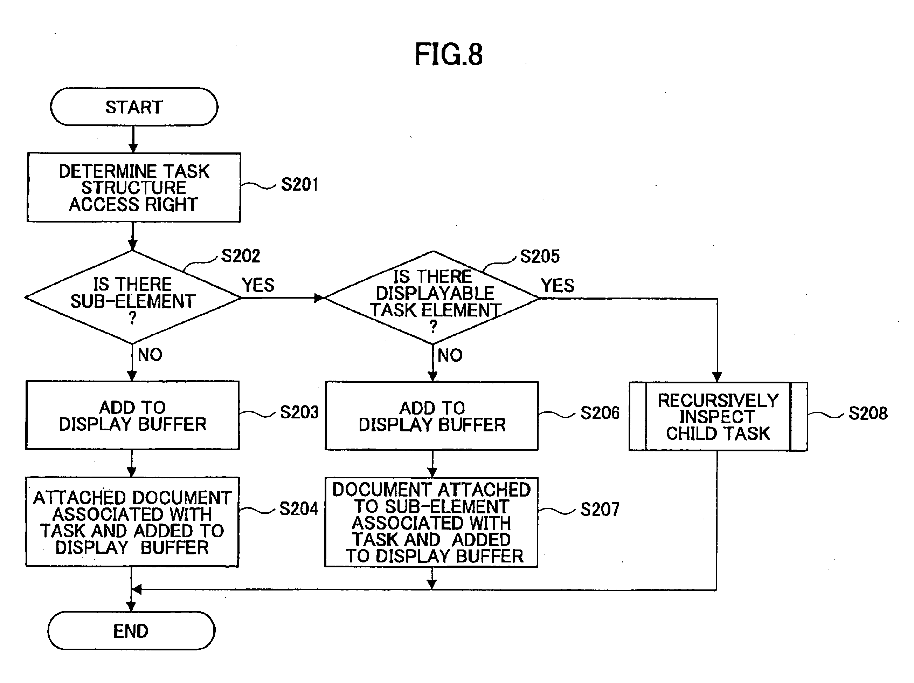

Further, it is possible to generate display data such that a part of the task structure, which part the user does not have permission to read, is not displayed by determining the access right of the user to the task structure. Fig. 8 is a flowchart showing this operation.

First, the access right of the user to the task structure is determined (Step S201). Then, it is determined whether a sub-element is in the task structure (Step S202). If there is no sub-element (No at Step S202), this task is added to a display buffer (Step S203). Further, an attached document is associated with the task and added to the display buffer (Step S204).

If, otherwise, there is a sub-element (Yes at Step S202), it is determined whether this task can be read (Step S205). If the task is not permitted to be read (No at Step S205), the task is added to the display buffer (Step S206). Further, a document attached to the sub-element is associated with the task, and is added to the display buffer (Step S207).

If, otherwise, the task can be read (Yes at Step S205), the sub-element is recursively inspected.

Further, the present invention is not limited to these embodiments, but variations and modifications may be made without departing from the scope of the present invention.

## Claims

1. A workflow retrieval system that supports a workflow, a task structure of which dynamically changes, the workflow retrieval system being **characterized by**:
a document database for storing a document that is attached to the workflow;
a first similar document retrieving unit for searching for another attached document based on a similarity degree of the attached document;
an access right management unit for distinguishing an access right to the attached document from an access right to the task structure of the workflow, and for managing the access rights;
a first extracting unit for extracting a document attached to a workflow specified by a user when searching for the work flow;
a second similar document retrieving unit for searching the document database using the attached document extracted by the first extracting unit as a search key;
a second extracting unit for extracting a workflow that has the attached document retrieved by the second similar document retrieving unit; and
a display unit for displaying the workflow, to the task structure of which the access right is permitted irrespective of the access right of the attached document that has been searched for.

2. The workflow retrieval system as claimed in claim 1, **characterized in that**
the task structure is divided into recursive partial task structures, and managed; and
the workflow is displayed as a searching result if the user is permitted to read the task structure of a higher order task element, even if the user is denied access to a task element, to which a document identified by a similar document retrieval result is attached, with reference to a user's task structure reading access right.

3. The workflow retrieval system as claimed in claim 2, **characterized in that**
when displaying the workflow obtained as the searching result, the partial task structure, the reading access right to the task structure of which is not permitted, is displayed as a single task, and all documents attached to the partial task structure are displayed as if they are attached to the single task.
